# EUROPEAN PATENT APPLICATION

(11) **EP 1 473 613 A1**
(43) Date of publication of application: **03.11.2004**
(21) Application number: 04005854.7
(22) Date of filing: 11.03.2004
(51) Int. Cl.: G06F 1/00, H04L 29/06

(54) **Network access control method, information providing apparatus, and certificate issuing apparatus for network access**

(30) Priority: 11.03.2003 JP 2003065409
(71) Applicant: Kabushiki Kaisha Toshiba, Tokyo (JP)
(72) Inventor: Tajima, Takeshi, Toshiba Corporation, Tokyo 105-8001 (JP)
(74) Representative: Henkel, Feiler & Hänzel

(57) **Abstract**

A network access control method comprises setting certificate information for each of user terminals, the certificate information including a user identification and access right information indicating a limited access right to a network, determining whether the user terminal is authenticated based on a user identification, and controlling access to the network in accordance with the certificate information when the user terminal is authenticated.

## Description

The present invention relates to a network access control method, an information providing apparatus, and a certificate issuing apparatus for network access.

Accounting is important for an information providing apparatus that uses the Internet and the like. Presently, a direct deposit or credit-card transactions are generally used for accounting processes for Internet accesses. When making a contract with an Internet service provider, a user supplies the provider with his or her bank account number or credit card number. In most cases, the accounting is carried out monthly.

In recent years, some mobile devices such as Pads and notebook personal computers have a wireless data communication function using a cellular phone, PHS, and wireless LAN represented by IEEE802 and provided with a function to be connected to the Internet. There is available a hot spot service (registered trademark) as a service for accessing to the Internet using these mobile devices. This service installs a wireless base station (access point) in a place where people gathers such as a coffee shop and enables access to the Internet from a mobile device in the shop.

Of systems using these mobile devices, many wireless LANs have no accounting infrastructure unlike infrastructures associated with communication common carriers such as cellular phones and PHs. Accordingly, applying the conventional method of monthly accounting for Internet accesses to the wireless LAN greatly burdens both communication line providers and users. This is a big problem to medium and small enterprises that intend to provide the hot spot service. The RADIUS (Remote Authentication Dial-in User Service) server, an access server for wireless LAN, has the accounting function. When a user actually pays the fee, the accounting function necessitates the user to enter his or her credit card number or clear an account at the cash register. Providing these facilities increases costs for the communication line providers and users for providing the hot spot service. The present system needs to clear accounts manually.

An advantage of the hot spot service is providing temporary accesses. Therefore, applying the conventional monthly accounting to the hot spot service is impractical. The time-based accounting is desirable for providing charged temporary accesses. In most cases, manual operations are used to measure the time and collect bills for the accounting (e.g., see paragraphs 0034 through 0037 in Japanese Patent Application KOKAI Publication No. 2002-315058).

The accounting method described in this publication is embodied as follows. When a customer enters a hot spot, a shop assistant issues a receipt describing the authentication information. Using this information, the customer accesses the Internet. After finishing an access to the Internet, the customer requests the shop assistant to clear the bill. The shop assistant computes the usage time and the fee based on the usage time. Thereafter, the user clears the fee at the cash register.

In this manner, the conventional information providing service has made it difficult to perform accounting tasks for the temporary usage without manual operations.

The present invention is directed to method and apparatus capable of charged temporary network access almost without manual operations.

According to an embodiment of the present invention, a network access control method comprises setting certificate information for each of user terminals, the certificate information including a user identification and access right information indicating a limited access right to a network; determining whether the user terminal is authenticated based on a user identification; and controlling access to the network in accordance with the certificate information when the user terminal is authenticated.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows a configuration of an information providing apparatus using a network access control method according to a first embodiment of the present invention;
FIG. 2 shows an example of certificate data used for the first embodiment;
FIG. 3 is a flowchart exemplifying a certificate issuing operation according to the first embodiment;
FIG. 4 is a flowchart exemplifying a network access operation according to the first embodiment;
FIG. 5 shows a modification of the certificate data;
FIG. 6 shows another modification of the certificate data; and
FIG. 7 shows yet another modification of the certificate data.

An embodiment of a network access control method, an information providing apparatus, and a certificate issuing apparatus for network access according to the present invention will now be described with reference to the accompanying drawings.

### [First embodiment]

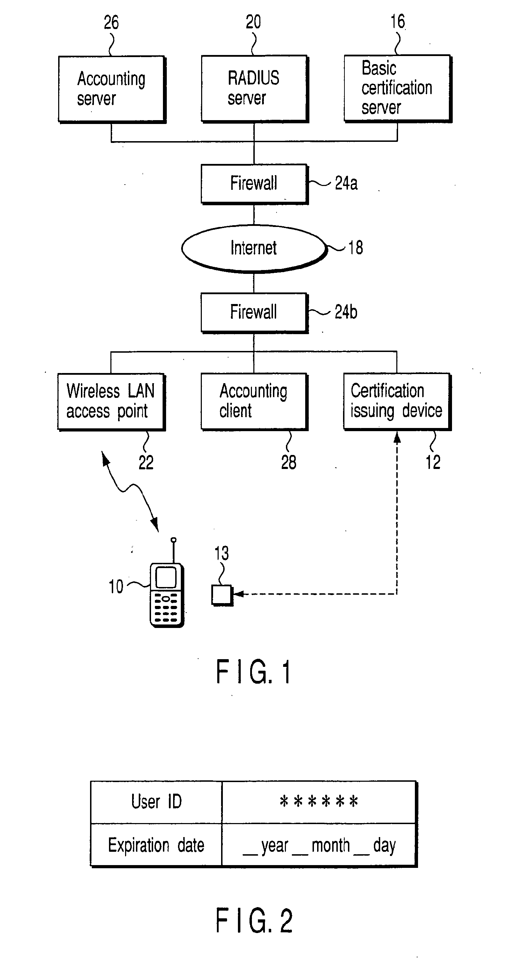

FIG. 1 shows a configuration of the information providing apparatus using the network access control method and the certificate issuing apparatus according to the first embodiment of the present invention.

The embodiment uses a device 10 to receive information providing services. The device 10 is assumed to be a mobile device that has a wireless data communication function and can operate on batteries. The device 10 may include a PDA and a notebook personal computer, but also a desktop personal computer which cannot operate on batteries.

The information providing apparatus comprises a certificate issuing device 12. The certificate issuing device 12 may be installed not only near a wireless LAN access point 22, but also at any other locations convenient to users. The number of certificate issuing devices 12 and the wireless LAN access point 22 is not limited to one. It is preferable to provide a plurality of certificate issuing devices 12.

The certificate issuing device 12 and wireless LAN access point 22 as well as an accounting client 28 are connected to the Internet 18 through a firewall 24b.

The embodiment comprises a basic certification server 16, a RADIUS server 20, and an accounting server 26. The basic certification server 16, RADIUS server 20, and accounting server 26 are connected to the Internet 18 through a firewall 24a.

The certificate issuing device 12 issues a certificate, i.e., a permission for accessing the Internet to a user. The certificate is electronically supplied as data to the user's mobile device 10 through a medium. The medium may be a storage medium 13 or a transmission medium. Available storage media 13 include a memory card such as an SD (secure digital) card using flash memory, a floppy disk, and the like. When the storage medium 13 is used, the mobile device 10 needs to have a slot for mounting the storage medium 13. The mobile device 10 reads data from the mounted storage medium 13. When a transmission medium is used, the mobile device 10 needs to include a memory. The certificate data is written to the memory of the mobile device 10 via a serial connection such as USB, a wired or wireless network, an infrared data communication, and the like.

As shown in FIG. 2, the certificate data contains a user ID (account) and expiration date data indicating an expiration date (access permission limit) of the certificate. The system is based on prepayment and specifies an expiration date corresponding to an amount the user prepaid. For example, the fee is set to 600 yen for a certificate valid for one day or to 1,000 yen for a certificate valid for two days. The fee need not be always paid in cash. Credit-card transactions may be also available if the certificate issuing device 12 is provided with a credit-card transaction function. The basic certification server 16 issues the user ID each time the certificate is issued.

Actually, the basic certification server 16 issues certificates. The certificate issuing device 12 simply receives certificate data from the basic certification server 16 and writes the data to a medium. Accordingly, the certificate issuing device 12 is a sort of automatic dispenser. When the certificate is issued, the user is notified of a password for network access. The notification method includes displaying the password on a screen of the certificate issuing device 12, writing the password on a receipt, and the like.

The basic certification server 16 is a network certification server operated by a third party. A network authenticated by the basic certification server 16 is assumed to be reliable. The highest reliability is attributed to the basic certification server 16. A typical administrative organization is VeriSign, Inc.

Though not shown, various information providing servers are connected to the Internet 18.

The wireless LAN access point 22 is an apparatus to relay network communication from the mobile device 10 to the RADIUS server 20. The wireless LAN access point 22 provides connection control in cooperation with the RADIUS server 20.

The RADIUS server 20 provides Internet access control for a user of the mobile device 10 based on the certificate data.

The firewalls 24a and 24b are an apparatus to guard the system against an unauthorized Internet access.

The following describes operations of the information providing apparatus in FIG. 1. The apparatus operations comprise a certificate issuing process and an Internet access control process.

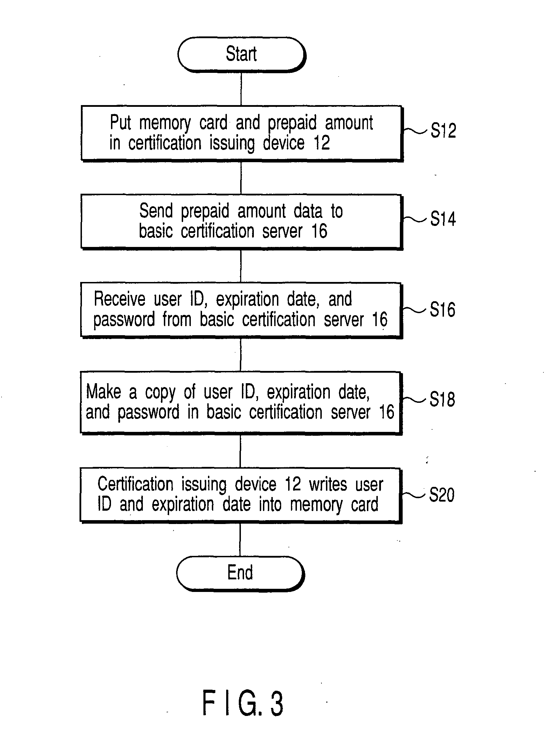

FIG. 3 is a flowchart showing a process of the certificate issuing device 12.

In order to have a certificate, a user supplies the certificate issuing device 12 with a memory card 13 and a necessary fee (step S12). The fee may be paid in cash or by credit card. The certificate issuing device 12 sends the entered amount data to the basic certification server 16 (step S14) and receives the user ID and the expiration date data corresponding to the prepaid amount from the basic certification server 16 (step S16). The basic certification server 16 stores a copy of the user ID and the expiration date data passed to the certificate issuing device 12 (step S18). The certificate issuing device 12 writes the user ID and the expiration date corresponding to the fee onto the memory card 13 (step S20).

The basic certification server 16 accesses the RADIUS server 20 and requests the RADIUS server 20 to issue an user ID and password for network access. The certificate issuing device 12 has user interfaces such as a display section, a printer, and the like. The certificate issuing device 12 notifies the user of the password and the user ID for wireless access obtained from the RADIUS server 20 by displaying and printing the same. This user ID for network access may be the same as or differ from the user ID for the certificate data.

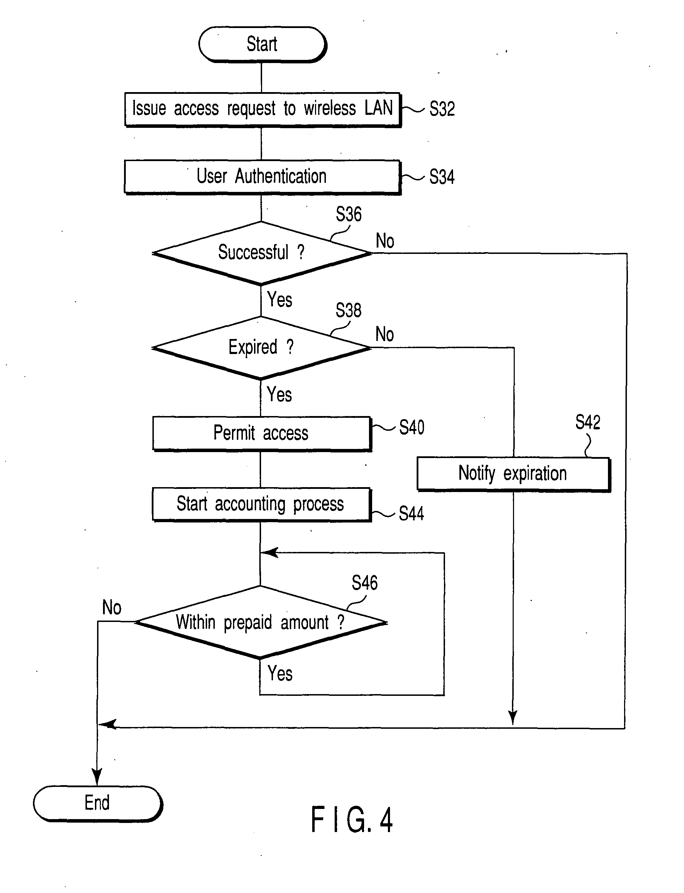

FIG. 4 shows a process to access the network. The user attaches the memory card 13 to the mobile device 10. The certificate data has been written to the memory card 13. The wireless LAN access point 22 issues an inquiry to mobile devices 10 within an access area thereof. The mobile device 10 responds to the inquiry and transmits certificate data to the wireless LAN access point 22 (step S32). The wireless LAN access point 22 transfers the certificate data transmitted from the wireless LAN access point 22 to the RADIUS server 20 for user authentication (step S34). The user authentication complies with IEEE802.1x, i.e., a wireless LAN standard. The RADIUS server 20 accesses the basic certification server 16. Using a copy of the certificate issued to the client, the RADIUS server 20 checks whether or not the certificate issued to the client (user) is usable (valid). If the user loses the certificate, the RADIUS server 20 allows the basic certification server 16 to invalidate the certificate. This can prevent the certificate from being used by unauthorized users.

At step S36, it is determined whether or not the user authentication succeeds. If the user authentication fails, the process terminates. If the user authentication succeeds, it is determined at step S38 whether or not the certificate's expiration date is valid. If the expiration date has passed, the process notifies this state to the mobile device 10 at step S42 and then terminates. If the expiration date is valid, the process permits the user to access the Internet at step 540. The RADIUS server 20 reads the expiration date information in the certificate to determine validity of the expiration date. When this information becomes invalid, the RADIUS server 20 invalidates the account (access permission).

After the access is permitted, the accounting server 26 and accounting client 28 start an accounting process at step S44. At step S46, it is determined whether or not the access is within the maximum depositing amount. When the access is within the maximum depositing amount, the process continues the access. When the access exceeds the maximum depositing amount, the process terminates the access.

As mentioned above, according to the embodiment, a certificate assigned with the expiration date is issued corresponding to the prepaid fee. Accordingly, it is possible to easily provide charged temporary access to the Internet without the need for an accounting infrastructure and attended services. When a plurality of corporations shares certificates, medium and small enterprises can easily provide temporary information services. The certificate issuing device 12 is available in an unattended manner and is not physically connected to the Internet 18. This makes it impossible to make connection to the Internet due to destruction and the like.

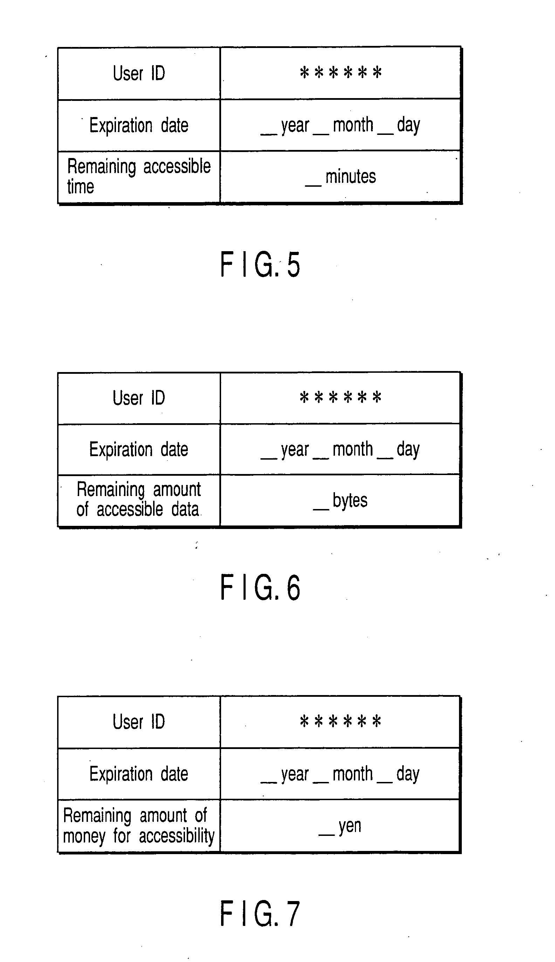

The present invention is not limited to the above-mentioned embodiment and may be embodied in various modifications. For example, while there has been described the accounting (expiration date) in units of days, it may be preferable to use the time or the amount of data as the unit. When the time is used as the unit, an item for the remaining accessible time is added to the certificate as shown in FIG. 5 and is specified correspondingly to the prepaid amount. The RADIUS server 20 has an access time count function. Each time the access time has passed, the RADIUS server 20 decreases the remaining time. The RADIUS server 20 permits the access until the remaining time reaches 0 within the expiration date. When the amount of data is used as the unit, the remaining amount of accessible data is likewise added to the certificate as shown in FIG. 6 and is specified correspondingly to the prepaid amount. In this case, the RADIUS server 20 has an access data amount measuring function. Each time the specified amount of data is accessed, the RADIUS server 20 decreases the remaining amount of data. The RADIUS server 20 permits the access until the remaining amount of data reaches 0 within the expiration date.

When the day or time is used as the unit, it may be preferable to specify the number of days or the time from the start of access instead of specifying the expiration date and time. In this case, the time count function of the RADIUS server 20 is used to count the number of days or the time that has passed from the start of access.

The above-mentioned description concerns examples of recording the number of days, the time, and the amount of data corresponding to the prepaid amount.
As shown in FIG. 7, it is possible to record the prepaid amount itself. In this case, the RADIUS server 20 converts the access time or the amount of data into the amount. The RADIUS server 20 decreases the amount for each specified access time or each specified amount of access data. The RADIUS server 20 permits the access until the remaining amount reaches 0 within the expiration date.

The above embodiment relates to a certificate indicating that a predetermined amount is paid. It is possible to issue a certificate of a predetermined right. For example, the certificate may represent a movie ticket for a predetermined date, an admission ticket for a park or a commutation ticket. In this case, if it is determined that the user authentication succeeds at step S36 in FIG. 4, it is determined whether or not the right is valid instead of whether or not the certificate's expiration date is valid at step S38. When the user purchases the right, a graphical user interface is provided to display a right selection menu on the terminal device.

Further, the prepaid amount may be used to purchase a merchandise in addition to access a network. That is, the terminal device having a certificate can be used as an electronic wallet. At the time of shopping, an amount of bill is displayed on the terminal device at a cash register, and if the user approves the amount the prepaid amount is decreased by the amount. This is equally applied to an electronic mall in the Internet.

The wireless LAN access point 22 can know the location of the mobile terminal 10. Therefore, it is possible to form a database storing a list of goods purchased and a walking route in a shop for each user and provide promotion information to a user based on the contents of the database depending on the location of the user (mobile terminal 10).

The present invention may be embodied as a computer-readable recording medium that records a program to allow a computer to execute specified means.

While the description above refers to particular embodiments of the present invention, it will be understood that many modifications may be made without departing from the spirit thereof. The accompanying claims are intended to cover such modifications as would fall within the true scope and spirit of the present invention. The presently disclosed embodiments are therefore to be considered in all respects as illustrative and not restrictive, the scope of the invention being indicated by the appended claims, rather than the foregoing description, and all changes that come within the meaning and range of equivalency of the claims are therefore intended to be embraced therein. For example, the present invention can be practiced as a computer readable recording medium in which a program for allowing the computer to function as predetermined means, allowing the computer to realize a predetermined function, or allowing the computer to conduct predetermined means.

As mentioned above, the present invention provides a network access control method and an information providing system capable of charged temporary network access almost without manual operations.

## Claims

1. A network access control method **characterized by** comprising:
setting certificate information for each of user terminals, the certificate information including a user identification and access right information indicating a limited access right to a network;
determining whether the user terminal is authenticated based on a user identification; and
controlling access to the network in accordance with the certificate information when the user terminal is authenticated.

2. The method according to claim 1, **characterized in that** the access right information indicates the access right based on a prepaid amount.

3. The method according to claim 2, **characterized in that**
the access right information indicates an expiration date based on the prepaid amount, and
the controlling permits access when an access date does not reach the expiration date.

4. The method according to claim 2, **characterized in that**
the access right information indicates an accessible time period based on the prepaid amount, and
the controlling permits access when a remaining accessible time period exist.

5. The method according to claim 2, **characterized in that**
the access right information indicates an accessible data size based on the prepaid amount, and
the controlling permits access when a remaining accessible data size exist.

6. The method according to claim 1, **characterized in that** the setting writes the certificate information into a storage medium.

7. The method according to claim 1, **characterized in that** the setting writes the certificate information into a storage medium included in the user terminal.

8. The method according to claim 1, **characterized in that** the controlling wirelessly connects the user terminal with a network access point.

9. The method according to claim 2, **characterized in that**, when no access is permitted, the controlling notifies no permission to the user terminal.

10. The method according to claim 1, **characterized in that** the setting allows a transaction in cash or by credit card.

11. A network access control method **characterized by** comprising:
receiving certificate information from a user terminal, the certificate information including a user identification and access right information indicating a limited access right to a network;
determining whether the user terminal is authenticated based on the user identification; and
controlling access to the network in accordance with the certificate information when the user terminal is authenticated.

12. An information providing apparatus
**characterized by** comprising:
a receiving unit (22) which receives an access request and certificate information from a user terminal, the certificate information including a user identification and right information indicating a limited information receiving right;
an authenticate unit (20) which determines whether the user terminal is authenticated based on the user identification; and
an information providing unit (16) which provides an information in accordance with the right information when the user terminal is authenticated.

13. The apparatus according to claim 12,
**characterized in that**, when the right information is expired, the information providing unit invalidates the access request and notifies invalidation to the user terminal.

14. The apparatus according to claim 12, **characterized by** further comprising a detector which detects a location of the user terminal and wherein the information providing unit which provides promotion information depending on the location of the user terminal.

15. A certificate issuing apparatus **characterized by** comprising:
a detecting unit (12) which detects a paid amount; and
a writing unit (12) which writes right information into a storage medium, the information indicating a limited access right to a network based on the paid amount.

16. The apparatus according to claim 15, **characterized in that** the writing unit writes access right information into the storage medium, the information indicating a limited access right to a network based on the paid amount.

17. The apparatus according to claim 15, **characterized in that** the writing unit writes ticket information into the storage medium.

18. The apparatus according to claim 15, **characterized in that** the writing unit writes the right information into a magnetic disk or a memory card.

19. The apparatus according to claim 15, **characterized in that** the writing unit writes the right information into a magnetic disk or a memory card included in the user terminal.
